# EUROPEAN PATENT APPLICATION

(11) **EP 3 702 931 A1**
(43) Date of publication of application: **02.09.2020**
(21) Application number: 19160386.9
(22) Date of filing: 01.03.2019
(51) Int. Cl.: G06F 16/182, H04L 29/08, G06Q 30/06

(54) **COMPOUND TRANSACTION PROCESSING IN A DISTRIBUTED SEQUENTIAL TRANSACTIONAL DATABASE**

(71) Applicant: British Telecommunications public limited company, London EC1A 7AJ (GB)
(72) Inventor: The designation of the inventor has not yet been filed
(74) Representative: British Telecommunications public limited company Intellectual Property Department

(57) **Abstract**

A computer implemented method of transaction validation of a plurality of request transactions for submission to a distributed sequential transactional database, each request involving a target transacting entity, the method comprising: generating a composite transaction as a data structure including a reference to each request transaction, the composite transaction having an identifier; storing the composite transaction in a distributed hash table based on a hash for the composite transaction; submitting the plurality of request transactions to the database in dependence on receipt of a response indication from each of the target transacting entities indicating that the target transacting entity accepts the transaction.

## Description

The present invention relates to transaction processing for compound transactions in a distributed sequential transactional database.

Data is stored in a distributed sequential transactional database, such as a blockchain database, by way of transactions being processed for committing to the database. Submitting a transaction for committing to the database involves communicating the transaction to multiple processing components, such as database miners or the like, for validating the transactions. Notably, the processing components involved in committing a transaction extends beyond the entities directly involved in the transaction. In a distributed sequential transactional database, transactions are shared with a potentially large number of processing components such as miner components. Thus, transaction validation and committing is a resource intensive task.

Increasingly, multiple transactions can occur in concert to achieve a transactional outcome. For example, where multiple transacting entities are required to transact to achieve an overall outcome then multiple individual transactions can be generated as part of an overall objective. Further, one or more transactions within a set of related transactions can result in a subsequent transaction such as a response transaction. Thus, multiple response transactions - related by virtue of their generation in response to other related transactions - can be generated.

Where groups of related transactions are submitted, validated and committed to a database, such groups of transactions and response transactions are effective at achieving and recording transactional data processing. However, where one or more transactions or response transactions fail, such as by a failure of a communicating entity to approve of, or accept, a transaction, then a whole set of related transactions can fail. In such circumstances, the computing and communication resource involved in distributing, validating, responding to and seeking to commit all transactions in the group of transactions is wasted. This resource includes the resource involved in communicating all transactions to miner components and the resource of miner components seeking to validate the transactions.

Thus, there is a challenge in providing for the validation of transactions in groups of related transactions while alleviating the resource consumption involved for groups of transactions that may fail to be committed.

According to a first aspect of the present invention there is provided, in a first aspect, a computer implemented method of transaction validation of a plurality of request transactions for submission to a distributed sequential transactional database, each request involving a target transacting entity, the method comprising: generating a composite transaction as a data structure including a reference to each request transaction, the composite transaction having an identifier; storing the composite transaction in a distributed hash table based on a hash for the composite transaction; submitting the plurality of request transactions to the database in dependence on receipt of a response indication from each of the target transacting entities indicating that the target transacting entity accepts the transaction.

Preferably the response indication includes an identification of a response transaction for submission to the database.

Preferably, receipt of a response indication includes an identification of a response transaction, and the response transactions are submitted to the database with the request transactions.

Preferably, the composite transaction includes a reference to each of the target transacting entities so as to inform target transacting entities of the requesting transactions.

Preferably, the method further comprises, in response to the receipt of a response indication from a target transacting entity, amending the composite transaction to include an indication of the response indication.

Preferably, the method further comprises, in response to an absence of a response indication from at least one of the target transacting entities, precluding the submission of the plurality of request transactions to the database.

Preferably, each target transacting entity corresponds to an incumbent communications service provider providing communications services to a consumer using a digital asset associated with the incumbent service provider, and each request transaction corresponds to a request to a communications service provider for a transfer of a digital asset to a requesting communications service provider.

Preferably, each digital asset is a telephone number and each of the incumbent and requesting service providers are telephony service providers.

According to a second aspect of the present invention there is provided, in a second aspect, a computer system including a processor and memory storing computer program code for performing the steps of the method set out above.

According to a third aspect of the present invention there is provided, in a third aspect, a computer program element comprising computer program code to, when loaded into a computer system and executed thereon, cause the computer to perform the steps of the method set out above.

Embodiments of the present invention will now be described, by way of example only, with reference to the accompanying drawings, in which:
Figure 1 is a block diagram a computer system suitable for the operation of embodiments of the present invention;
Figure 2 is a component diagram of an arrangement for transaction validation of request transactions for submission to a distributed sequential transactional database according to embodiments of the present invention; and
Figure 3 is a flowchart of a method of transaction validation according to embodiments of the present invention.

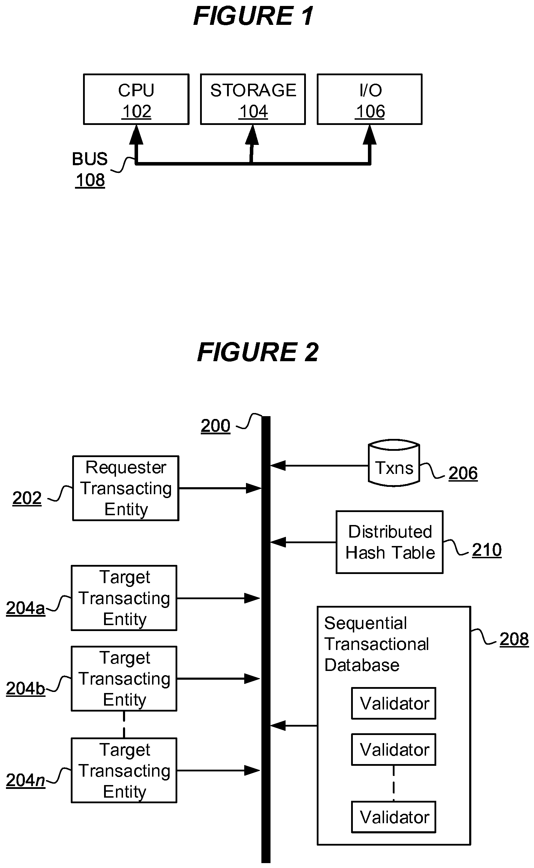

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random-access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram of an arrangement for transaction validation of request transactions for submission to a distributed sequential transactional database 208 according to embodiments of the present invention.

The distributed sequential transactional database 208 is a database that may be distributed and shared by multiple entities communicating via a communications network 200. For example, the distributed sequential transactional database 208 is a blockchain database. Distributed sequential transactional databases are well known in the field of cryptocurrencies and are documented, for example, in "Mastering Bitcoin. Unlocking Digital Crypto-Currencies." (Andreas M. Antonopoulos, O'Reilly Media, April 2014). Typically, a distributed sequential transactional database can be constituted as a distributed chain of block data structures accessed by a network of nodes, often referred to as a network of validators or miners. For example, each block in a blockchain includes one or more data structures, and in some exemplary blockchains a Merkle tree of hash or digest values for transactions included in a block are used to arrive at a hash value for a block which is itself combined with a hash value for a preceding block to generate a chain of blocks (i.e. a blockchain). A new block of one or more transactions is added to the blockchain by such miner software, hardware, firmware or combination systems in, for example, a miner or validator network. A newly added block constitutes a current state of the blockchain. Such validators undertake validation of substantive content of transactions (such as any criteria defined therein) and adds a block of one or more new transactions to a blockchain as a new blockchain state when a challenge is satisfied as a "proof-of-work", typically such challenge involving a combination hash or digest for a prospective new block and a preceding block in the blockchain and some challenge criterion. Thus, validators in a validator network may each generate prospective new blocks for addition to the blockchain. Where a validator satisfies or solves a challenge and validates the transactions in a prospective new block such new block is added to the blockchain.

In one embodiment, the distributed sequential transactional database 208 is used to store transactions relating to the association of a digital asset associated with a communications service provider. For example, a telephone number, address, digital key, token, state of authorisation, email address, network address or other digital asset employed by a communications service provider to provide communications services to consumers or by which consumers are identified can be associated with the communications service provider by way of one or more transactions stored in the database 208. In one example, a telephone number for a telecommunications consumer entity (such as a mobile telephony device) can be associated with a communications service provider by way of one or more transactions indicating such association and the currency of such association in the database 208.

The database 208 is accessible via, and communicates via, the communications network 200 such as a wired or wireless, physical or virtual network or group of networks. The database 208 includes, has associated and/or is accessed by validator components constituting, for example, miners for a blockchain database. The validator components are hardware, software, firmware or combination components operating to validate blocks of transactions for committing in the database 208 as a current state of the database 208. The validators store, have stored and/or share state information constituting a current and, in some embodiments, historical state of the database 208 by way of consensus, majority or other suitable means.

Whereas in conventional distributed sequential transactional databases transactions are submitted for processing by validators and potential inclusion in a new state of the database by transacting entities, embodiments of the present invention provide for the interoperation of transacting entities involved in prospective new transactions before such transactions are submitted to the database 208. Such interoperation is provided by way of a distributed hash table 210 as a distributed data structure accessible via the network 200. A distributed hash table is a decentralised distributed data structure for the storage and retrieval of data in the manner of a hash table (e.g. based on *(key, value)* pairs). A distributed hash table includes a plurality of nodes such as computer systems, processes or the like that cooperate in the efficient storage and retrieval of values based on keys generated by a hashing algorithm for the values. Keys are identifiers which map to particular values which in turn can be anything from addresses, to documents, to arbitrary data. Distributed Hash Tables are known in the art as described in detail in, for example, the book "Distributed Hash Table, Theory, Platforms and Applications" (Zhang, H., Wen, Y., Xie, H., Yu, N., Springer, 2013). For example, chapter 2 of the book details distributed hash table theory.

The distributed hash table 210 of Figure 1 is employed by entities for transacting via the distributed sequential transactional database 208. In particular, a requesting entity 202 is a hardware, software, firmware or combination component involved in prospective transactions with a plurality of target transacting entities 204a, 204b ... 204n. The target transacting entities 204 are similarly hardware, software, firmware or combination components suitable for engaging in transactions with the requesting entity 202 and can be taken from a larger set of entities capable of transacting via the database 208. Notably, an entity is capable of transacting via the database 208 if it is suitable for being subject to a transaction such as by being referenced in, or addressed by, a transaction for submission to the database 208. Thus, to be capable of transacting, an entity may require an address or the like.

According to embodiments of the present invention, the requester entity 202 generates a request transaction for each of the plurality of target entities 204. Each request transaction is suitable for validation and storage by the database 208. A request transaction directed to a target entity 204 invites a response transaction associated with the target entity 204. For example, a request transaction can be a request to transfer an association of a digital asset between two transacting entities, and a corresponding response transaction can indicate an approval or disapproval of such request. Thus, a request transaction and response transaction pair can constitute a complete transaction in the sense of achieving a goal of, for example, transferring association of the digital asset. Where a response transaction disapproves of a request, or no response transaction is received in respect of a request, then the transaction can be said to have failed and no transfer of association of the digital asset takes place. Notably, a current state of association of a digital asset can be reflected as a current state of the database 208 constituted by way of a most recent transaction in the database 208 in respect of the asset, where the most recent and all prior transactions in respect of the asset are validated in the database 208.

The plurality of request transactions generated by the requester entity 202 are interdependent such that, should any one of the transactions fail, then the entire plurality can be determined to have failed. In use, the requester transacting entity 202 generates the plurality of request transactions for storage at an intermediate storage such as a transaction store 206. The transaction store 206 can be a data, database, file or other suitable store accessible to the requester and target entities. For example, the transaction store 206 can be directly accessible via the network 200. Alternatively, the transaction store 206 can be constituted as a peer-to-peer storage mechanism in which transactions in the store 206 are stored at, for example, the requester entity 202 and are retrievable by target entities 204 based on a reference, index, address or other suitable identifier. For example, a torrent peer-to-peer protocol can be employed for the storage and sharing of transactions.

In use, the requester entity 202 generates the plurality of request transactions for storage in the transaction store 206. The requester entity also generates and stores a record in the distributed hash table 210 as a composite transaction. The composite transaction is data structured as a data structure including at least a reference to each of the request transactions and has an identifier on which basis it is stored in the distributed hash table 210. For example, the identifier can be a composite, hash, aggregate or other derivative of the content of the composite transaction. In some embodiments, the composite transaction further includes one or more of, inter alia: an identification of target entities 204 to which the request transactions are directed; and a signature of the requester entity 202.

The target entities 204 identify the existence of the composite transaction stored in the distributed hash table 210 by suitable means. For example, in one embodiment, a probabilistic data structure such as a Bloom filter can be used to represent target entities indicated in composite transactions stored in the distributed hash table 210. For example, a Bloom filter can be a bit array of elements in which hashed data items are represented by setting bits in the array in dependence on a value of the hash for each data item, as is well known in the art. Additionally or alternatively, target entities 204 can be notified when request transactions are generated for them and indicated in the composite transaction in the distributed hash table 210.

Target entities 204 can access the composite transaction in the distributed hash table 210 to identify transactions addressing them in the transaction store 206. Subsequently, target entities 204 can generate appropriate response transactions in response to such request transactions. The response transactions can be stored in the transaction data store 206, such as by way of a peer-to-peer data sharing protocol or the like, for access by the requester entity 202. Indication of the existence of a response transaction can be communicated to the requester 202 and/or, for example, indication of the response transaction can be stored in the composite transaction in the distributed hash table 210. In this way, response transactions are available to, accessible by or otherwise accessed by the requester entity 202.

The request transactions stored in the transaction store 206 are submitted to the distributed sequential transactional database 208 in dependence on receipt of indications of response from each of the target transacting entities 204 indicating that the target entity 204 accepts the transaction. In this way, entities not involved in the plurality of request transactions, such as the validators and other entities, are not burdened by receiving the plurality of request transactions where at least one of the request transactions is not accepted, so avoiding unnecessary impact and resource consumption on the distributed sequential transactional database 208. In one embodiment, on indication of approval of all request transactions, the requester entity 202 submits both the request transactions and the response transactions to the database 208.

By way of example, an embodiment of the present invention will now be described in the context of communications service providers and the transfer of digital assets such as telephone numbers from incumbent service providers to a new service provider. In such an embodiment, each of the requester entity 202 and the target entities 204 are associated with communications service providers such as telephony service providers and the database 208 stores a current association of digital assets, such as telephone numbers, with each of the target entities 204. Embodiments of the present invention are suitable for effecting the transfer of association of the telephone numbers as digital assets from the target entities 204, as incumbent communications service providers in respect of the assets, to the requester entity 202 as a new communications service provider in respect of the assets. Thus, the requester entity 202 generates request transactions directed to the target transacting entities 204 to request transfer of association of the digital assets to be associated with the requester entity 202. The plurality of request transactions is used to generate a composite transaction for storage in the distributed hash table 210 as previously described. Subsequently, the target entities 204 may accept (e.g. approve), reject (e.g. disapprove) or fail to respond to the request transactions. Where the target entities 204 accept the request transactions (by way of response transactions), the requester entity 202 effects transfer of association of the digital asset by submission of the request transactions and the response transactions to the database 208.

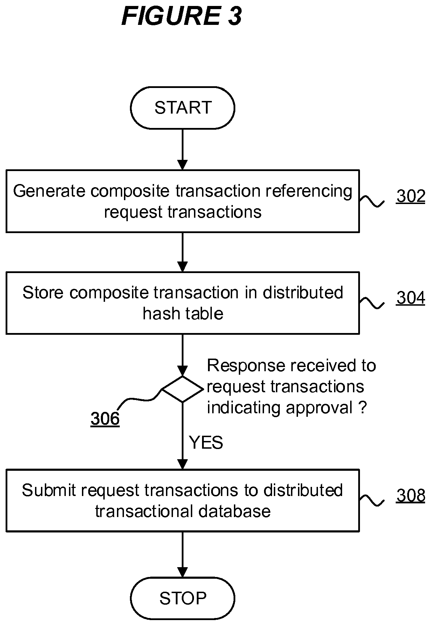

Figure 3 is a flowchart of a method of transaction validation according to embodiments of the present invention. Initially, at step 302, the requester entity 202 method generates a composite transaction referencing a plurality of request transactions. The composite transaction is stored in the distributed hash table 210 at step 304. At step 306 the method determines if responses are received to the request transactions indicating approval of the target entities 204 and, where such approvals are received, the method submits the request transactions to the database 208 at step 308.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer implemented method of transaction validation of a plurality of request transactions for submission to a distributed sequential transactional database, each request involving a target transacting entity, the method comprising:
generating a composite transaction as a data structure including a reference to each request transaction, the composite transaction having an identifier;
storing the composite transaction in a distributed hash table based on a hash for the composite transaction;
submitting the plurality of request transactions to the database in dependence on receipt of a response indication from each of the target transacting entities indicating that the target transacting entity accepts the transaction.

2. The method of claim 1 wherein the response indication includes an identification of a response transaction for submission to the database.

3. The method of claim 1 wherein, receipt of a response indication includes an identification of a response transaction, and wherein the response transactions are submitted to the database with the request transactions.

4. The method of any preceding claim wherein the composite transaction includes a reference to each of the target transacting entities so as to inform target transacting entities of the requesting transactions.

5. The method of any preceding claim further comprising, in response to the receipt of a response indication from a target transacting entity, amending the composite transaction to include an indication of the response indication.

6. The method of any preceding claim further comprising, in response to an absence of a response indication from at least one of the target transacting entities, precluding the submission of the plurality of request transactions to the database.

7. The method of any preceding claim wherein each target transacting entity corresponds to an incumbent communications service provider providing communications services to a consumer using a digital asset associated with the incumbent service provider, and each request transaction corresponds to a request to a communications service provider for a transfer of a digital asset to a requesting communications service provider.

8. The method of claim 7 wherein each digital asset is a telephone number and each of the incumbent and requesting service providers are telephony service providers.

9. A computer system including a processor and memory storing computer program code for performing the steps of the method of any preceding claim.

10. A computer program element comprising computer program code to, when loaded into a computer system and executed thereon, cause the computer to perform the steps of a method as claimed in any of claims 1 to 8.
